# EUROPEAN PATENT SPECIFICATION

(11) **EP 3 652 439 B1**
(45) Date of publication and mention of the grant of the patent: **02.12.2026**
(21) Application number: 18711481.4
(22) Date of filing: 13.02.2018
(51) Int. Cl.: F04C 18/356, F01C 1/356, F01C 11/00, F01C 21/08, F02B 53/04

(54) **ROTOR-STATOR ASSEMBLY FOR A ROTARY ENGINE**
ROLLKOLBENMOTOR MIT EINEM FLÜGELAKTUATOR
MOTEUR ROTATIF AVEC UN ACTIONNEUR DE VANNE

(30) Priority: 13.02.2017 EP 17155935
(43) Date of publication of application: 20.05.2020
(73) Proprietor: Stassinopoulou, Eleni, Athens (GR); Stassinopoulou, Eirini, 16674 Athens (GR)
(72) Inventor: STASSINOPOULOS, George, 16675 Athens (GR)
(74) Representative: Karakatsanis, Georgios
(86) International application number: PCT/EP2018/053554
(87) International publication number: WO 2018/146333

(56) References cited:
- EP-A2- 0 740 051
- CH-A- 223 597
- DE-A1- 3 930 560
- FR-A- 1 357 588
- US-A- 4 638 776

## Description

### Field of the invention

The invention relates to the field of rotary piston arrangements for rotary engines, compressors or pumps.

### Background of the invention

Rotary engines are well known and have been developed in various configurations, the most famous of which is the Wankel engine. Common to all rotary engines is the provision of two or more variable-volume chambers formed between a rotor and the walls of the stator chamber in which the rotor rotates. The volume of each chamber varies as the rotor rotates in the stator. The Wankel design defines three chambers, isolated from each other by the contact between the triangular rotor's three apexes and the oval chamber wall. All phases of the four-stroke engine cycle are implemented by the three variable-volume chambers. Disadvantages of the Wankel rotor design are its complex eccentric rotor bearing and the continuous lateral displacement of the rotor mass, which expends energy and promotes wear and vibration. Other rotary piston arrangements have been proposed with a view to providing rotary engines with simpler, balanced rotor construction and improved performance.

### Prior art

American patent US4638776 describes a twin-rotor engine which has two cooperating rotors arranged adjacent to each other and communicating via a connecting channel. The first eccentric rotor rotates inside a first (compression) chamber so as to draw in a fuel/air mixture during a first part of the cycle (intake) and then compresses the mixture during a second part of the cycle (compression). The compressed mixture is then expelled into a second (combustion) rotor chamber via the connecting channel, whereupon the mixture is detonated in a third part of the cycle (power) and then expelled through an exhaust port in a fourth part of the cycle (exhaust). The rotors of US4638776 are equipped with radial vanes providing a low-friction seal between the rotor and the stator (chamber). These vanes are arranged to move radially outward and inward from the rotor, synchronised with the eccentric motion of the rotor, so as to maintain a small but constant gap distance between the vane tip and the inner peripheral wall of the chamber. This vane is moved in and out by a pin which engages in a circular slot in the side wall of the chamber. This vane drive arrangement is subject to wear, and is difficult to access for adjustment and repair. Furthermore, the vane and the drive arrangement embody an eccentric and radially-mobile mass and exert radial forces on the rotor which are complicated to compensate and contribute to an imbalance in the rotor.

German application DE 3930560A1 and French application FR 1357558A describe a rotary pump/motor in which a vane is spring-biased towards the rotor.

CH 223597 A discloses a rotary compressor with eccentrically rotating rotary piston, whereby that at the point of contact between the cylinder bore and rotary piston a movable sealing strip is arranged at the point of contact between the cylinder bore and the rotary piston, which, when passing over a sealing slide from the cylinder bore when is lifted off the cylinder bore.

### Brief description of the invention

The present invention aims to overcome at least some of the above disadvantages of prior art engines such as the one described above. To this end, the invention foresees a rotary engine as described in claim 1. Further variants of the invention are set out in the dependent claims. The inventive reciprocating vane drive (follower shaft) arrangement, with the moving vane seal effected with a predetermined (but very small) gap at the rotor surface instead of at the chamber wall, allows a rotor construction which is simpler, lighter and better balanced. It also permits easier access for maintenance, adjustment and repair of the vane seal and the reciprocating vane drive mechanism.

### Brief description of the drawings

The above and other advantages of the invention will be described in detail with reference to the attached drawings, in which:
Figure 1 shows in cross-section, in the plane D-D indicated in figure 7, an example of a first (compression) rotor in a twin-rotor engine using a vane actuator according to the present invention.
Figure 2 shows in cross-section, in the plane B-B indicated in figures 7 and 9, an example of a second (combustion) rotor in a twin-rotor engine using a vane actuator according to the present invention.
Figure 3 shows in cross-section, in the planes F-F indicated in figures 2 and 7, the first and second rotors of figures 1 and 2.
Figure 4 shows in cross-section, in the plane G-G indicated in figures 2 and 7, the rotary engine of figures 1 to 3.
Figure 5 shows in cross-section, in the plane C-C indicated in figure 7, the rotary engine of figures 1 to 4.
Figure 6 shows in cross-section, in the plane A-A indicated in figures 7 and 9, the rotary engine of figures 1 to 5.
Figure 7 shows a plan view of the rotary engine of figures 1 to 6.
Figure 8 shows a side elevation view, in the plane indicated by E-E in figure 7, of the rotary engine of figures 1 to 7.
Figure 9 shows a variant of the tangential seal used in the engine of figures 1 to 8.
Figure 10 shows how two engines of the type illustrated in figures 1 to 8 can be arranged coaxially, back-to-back, sharing a common main shaft and vane actuator.
Figures 11a to 11c show a variant with an offset arrangement of the vane actuator guides.
Figure 12 shows a variant of the vane with automatic gap adjustment.
Figure 13 shows a first longitudinal cross-section of the vane with automatic gap adjustment.
Figure 14 shows a second longitudinal cross-section view and a transverse cross-sectional view of the vane with automatic gap adjustment,
Figure 15 shows a side elevation view of the vane with automatic gap adjustment.
Figure 16 shows a first cross-sectional view of the rotor vane with automatic gap adjustment.
Figure 17 shows a second cross-sectional view of the rotor vane with automatic gap adjustment.
Figure 18 shows a plan view of a rotor with a rotor vane with automatic gap adjustment.

The figures are provided merely as an aid to understanding the principles underlying the invention, and should not be taken as limiting the scope of protection sought. Where the same reference numbers are used in different figures, these are intended to indicate similar or equivalent features. It should not be assumed, however, that the use of different reference numbers is intended to indicate any particular degree of difference between the features to which they refer.

### Detailed description of the invention

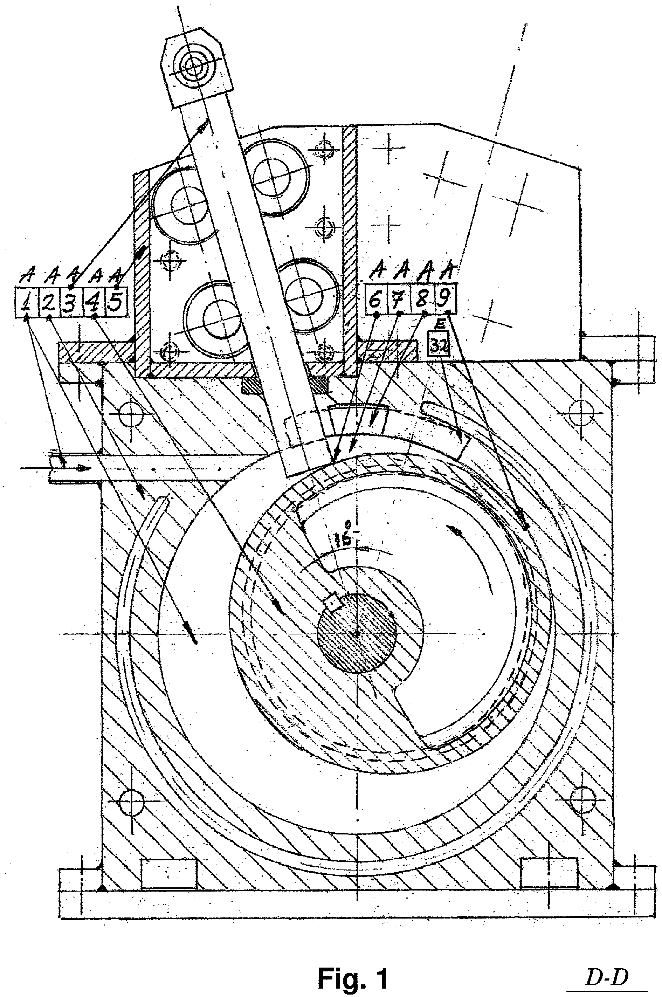

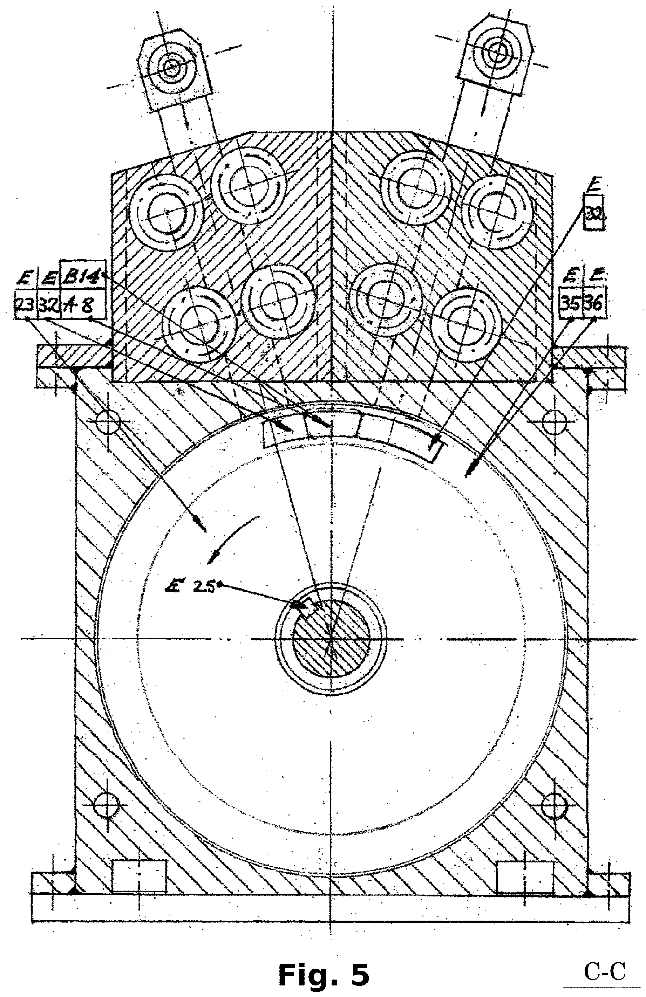

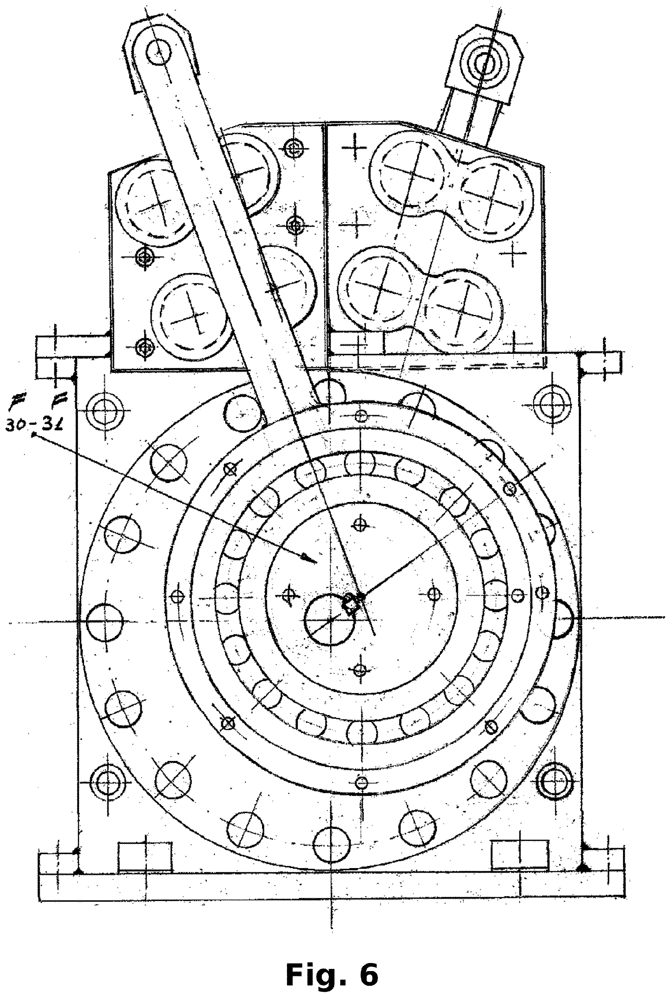

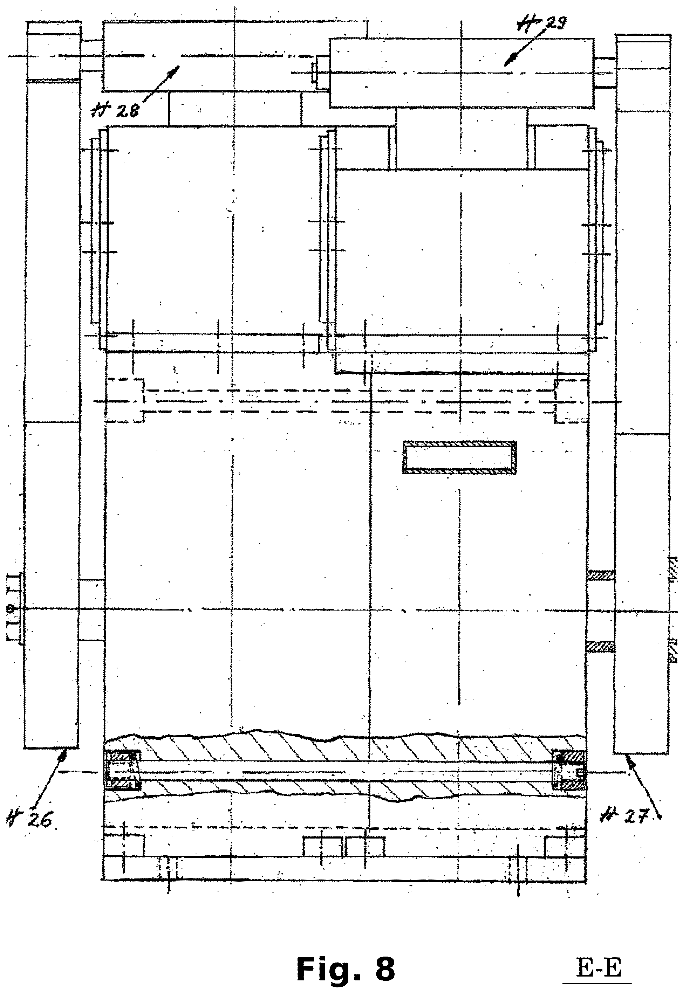

Figures 1 to 8 show different views of the same example implementation of a twin-rotor rotary engine employing a vane actuator according to the present invention. Reference numbers are used consistently throughout, but not all reference number are 5 included in every view for the sake of clarity. An index of the reference numbers is provided at the end of this description.

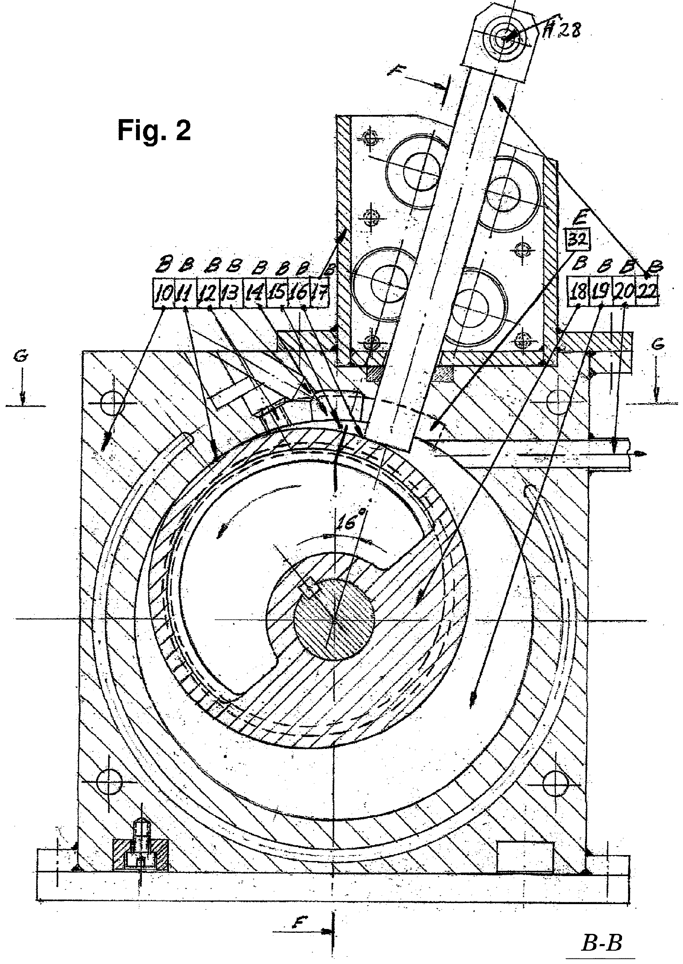

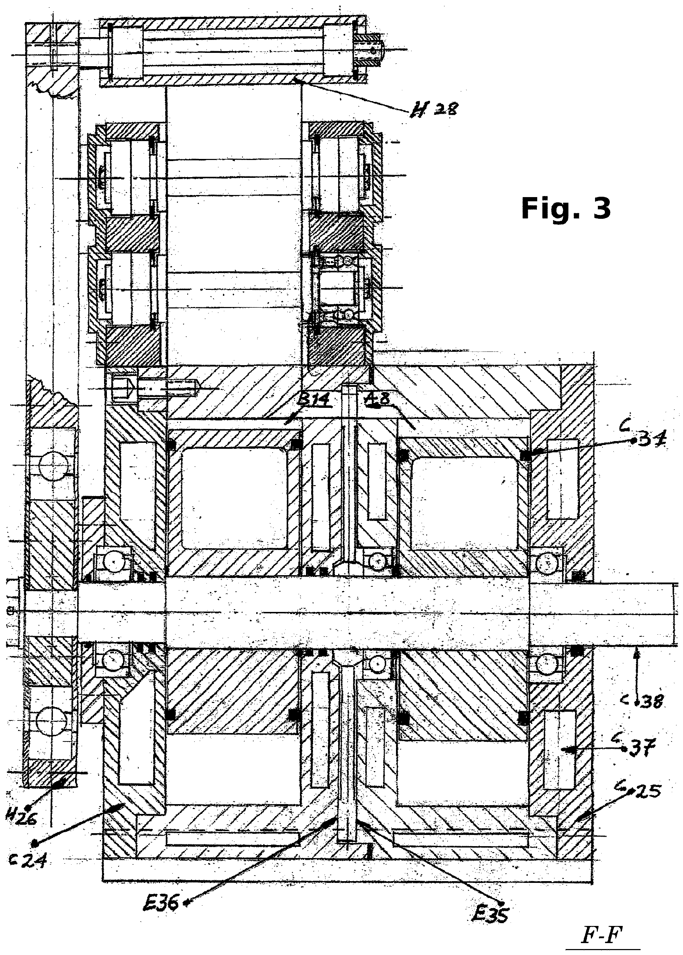

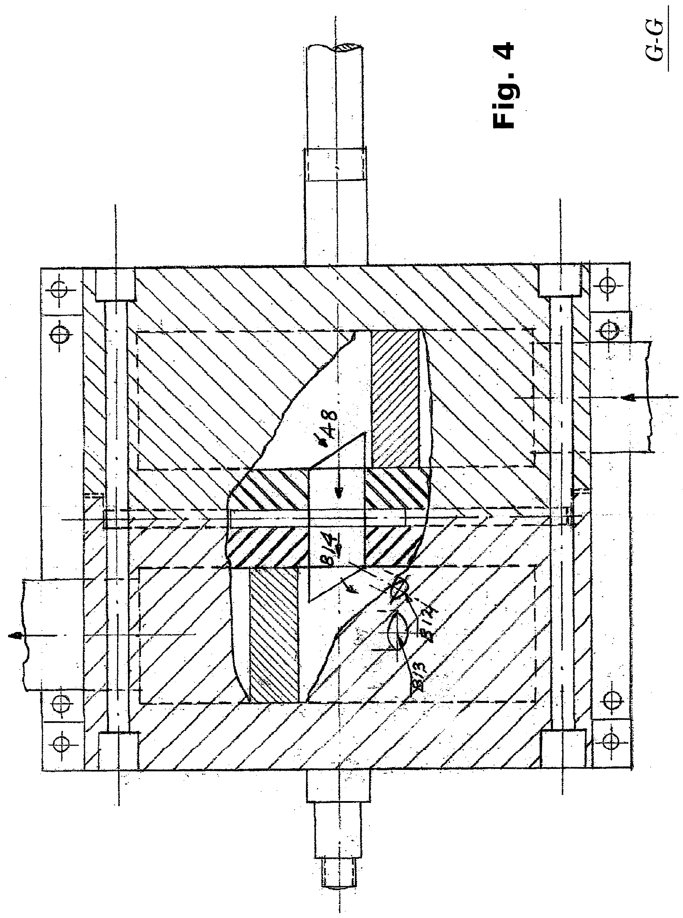

The example implementation is a four-cycle internal combustion engine working with eccentric rotors instead of conventional reciprocating pistons. It comprises two rotor- stator assemblies; a compression rotor-stator assembly is illustrated in figure 1, and a combustion rotor-stator assembly is illustrated in figure 2. The two assemblies are arranged with coaxial stator chambers which are connected for fluid communication by means of a connecting channel A8/B14. The connecting channel is opened and closed by an opening E32 in a valve disc E23 located between the two assemblies and arranged to rotate with the main shaft C38. Each assembly comprises a stator chamber with a central main shaft and a peripheral inner wall concentric with the main shaft, and an eccentric rotor mounted on the main shaft such that the most remote part of its outer peripheral surface from the rotation axis touches or almost touches the inner peripheral wall of the stator chamber at point A9. The outer peripheral surface of the rotor, and the inner peripheral wall of the stator chamber are both cylindrical. The compression rotor A4 shown in figure 4 is shaped such that its centre of gravity coincides with the centre axis of the main shaft. Balancing may be achieved by machining one or more hollow regions in the rotor, for example. Side seals are provided between the side walls of the rotor and the side walls of the stator chamber. These are indicated by dotted lines in figures 1 and 2, and by C34 in figure 3. They are shown as being concentric with the circular shape of the rotors. Alternatively, they may preferably be arranged concentrically with the main shaft C38. According to one variant, the balancing may be achieved by shaping or configuring all of the components of the vane actuator (eg including the actuator rotor, the bearing, the follower shaft, the pivot, the vane shaft and the vane) such that their total net rotational centre of gravity coincides with the axis of rotation of the main shaft.

The usable stator volume (ie the part outside the rotor periphery) is divided into two sub-volumes, AI and A7, by vane seal A6 and tangential seal A9. Vane seal A6 is formed at the tip of vane A3, which is held in almost-contact with the eccentrically-rotating surface of rotor A4 by vane actuator means which will be described in more detail below. Tangential seal A9 is formed by the close proximity between the peripheral surface of the rotor and the peripheral wall of the stator chamber. Additional seal components such as packing or a sprung seal, may be included as will be discussed below. Sub-volume AI is the air-intake volume; as the rotor rotates in the direction of the arrow, the increasing volume of sub-volume AI draws air in through the air intake channel. At the same time, air drawn in during the previous rotation is being compressed in compression volume A7 by the rotation of the rotor A4. The compressed air is allowed through the connecting channel A8 when the opening E32 in the valve disc E23 coincides with the connecting channel A8. Guide A5 and vane A3 are positioned adjacent to and rotationally after the connecting channel A8, so that the air in sub-volume A7 reaches its maximum compression at the point in the rotation cycle where the valve disc opens to allow the compressed air into the connecting channel. After the compressed air has passed through the connecting channel A8/B14 and into the enclosed subvolume B15 of the adjacent (combustion) rotor-stator assembly, fuel is sprayed or misted into the airflow.

In order to achieve satisfactory compression, the vane seal A6 is preferably maintained at a very small distance (eg less than 0.3 mm or less than 0.1 mm, or less than 0.06 mm), ie almost touching the surface of the rotor. Vane A3 is mounted so that its shaft can reciprocate radially, running in guide means A5 (eg between two pairs of rollers mounted in bearings, as shown). A fluid seal is also provided around the vane shaft A3 such that the vane shaft can move radially in and out without any fluid losses around the vane shaft.

Figure 2 shows the combustion rotor-stator assembly, which operates in a similar manner to the compression assembly except that the sub-volumes B15 and B19 vary inversely with respect to their counterpart sub-volumes AI and A7 of the compression assembly. In this example, the two rotors are both rotationally fixed to the same main shaft C38, but with the combustion rotor leading the compression rotor by an offset angle of approximately 90°. Fuel is introduced (eg sprayed or atomised) into the sub-volume B15 by fuel injection nozzle B13 after the closure of the rotating valve. The vane shaft guide B17 and the vane shaft B22 which maintains the vane seal gap B16 are configured so that the vane is positioned adjacent to and rotationally before the connecting channel so that the compressed fuel-air mixture in the sub-volume B15 can then be detonated by the ignition spark B12, thereby providing drive force on the rotor B18. Meanwhile, sub- volume B19 contains the exhaust gases from the previous detonation, which are then expelled through exhaust channel B20.

In the illustrated example, the compression and combustion vanes are angularly positioned 16° before and 16° after the centre-line of the connecting channel, but other angular positions could be used. The angular separation of the two vanes is thus 32° in this example. This angular separation may preferably be less than 40°, or more preferably less than 30°, or more preferably less than 25° in order to minimise the instantaneous size of the space created temporarily by the combined volumes of the compression sub- volume A7, the detonation sub-volume B15 and the volume of the connecting channel A8/B14.

The tips of the vanes A3 and B22, which form fluid-tight pressure seals A6 and B16 by their proximity with the peripheral surface of the rotors A4 and B18 respectively, are shown as planar (flat) surfaces, in this case perpendicular to the longitudinal axis of the vane shaft. The substantially planar (flat) tip configuration allows different parts of the tip surface to come into contact or almost-contact with the rotor surface at different parts of the rotational cycle. Thanks to the flat vane tip, the vane-to-rotor gap tolerances can be kept to a minimum.

Figures 3, 6 and 8 show how the vane actuators may be configured to ensure that the vanes closely follow their respective rotor surfaces. The shaft of each vane is connected by a pivot or hinge H28 to a reciprocating follower shaft rotatably mounted on an eccentric actuator rotor, concentric with the corresponding rotor A4 or B18 and coaxial with the main shaft, so as to rotate with the main shaft. The actuator rotor H26, H27 may comprise ball or roller bearings for smooth, reliable operation. As with the rotors A4 and B18, the actuator rotors and bearings may be shaped so as to be rotationally balanced, having a centre of gravity which coincides with the axis of rotation. Note that the actuator rotor need not have the same radius as the corresponding rotor A4 or B18, however the rotors' eccentricity (distance of rotation axis from centre axis), and their rotational position on the main shaft should be the same.

The vane shaft or the follower shaft can be provided with elongation-adjustment means for adjusting or fine-tuning the radial position of the vane relative to the centre axis of the actuator rotor (and therefore relative to the outer peripheral surface of the main rotor A4, B18. The elongation adjustment means may be mechanical, for example, and may be controlled to adjust the shaft elongation in dependence on predetermined parameters such as the surface profile of the main rotor, or on dynamic parameters, such as temperature or thermal expansion eg of the rotor.

While the embodiments are described here as having a finite predetermined or controllable vane seal gap, the vane shaft may alternatively be provided with a vane which is lifted from the rotor surface, in case of expansion, such that an effective seal contact, but with minimal friction, can be accomplished automatically.

Figures 3, 4 and 5 also illustrate the operation of the valve disk E23, rotationally mounted on the main shaft and provided with side faces E35 and E36 which are sealed for example mechanically, with tight tolerances, with a sealing lubricant against the outer side faces of the two stator chambers. Valve disk E23 is provided with an opening which is configured to coincide with the fluid connecting channel A8/B14 for a short part of the rotation cycle to allow compressed air from the compression chamber to enter the combustion chamber. Fuel is also introduced into the compressed air through nozzle B13. Once the connecting channel A8/B14 has been closed again by the rotation of the opening E32 past the channel, the fuel/air mixture is detonated by ignition B12. In this way, the illustrated configuration achieves one power stroke per rotor revolution.

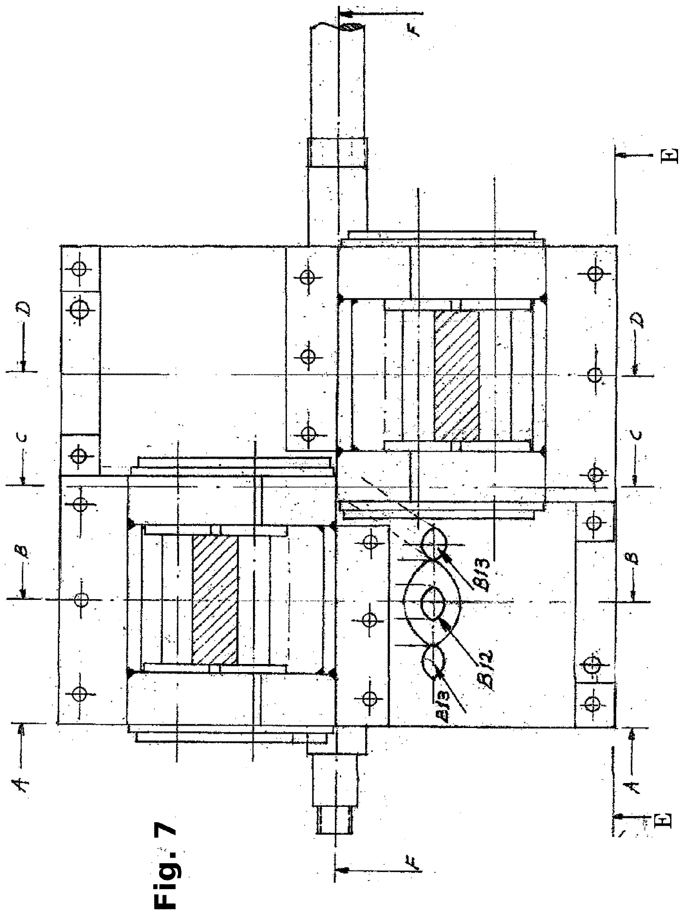

Figure 7 also shows an arrangement in which multiple (two in this example) fuel injectors are used to achieve good mixing of air and fuel.

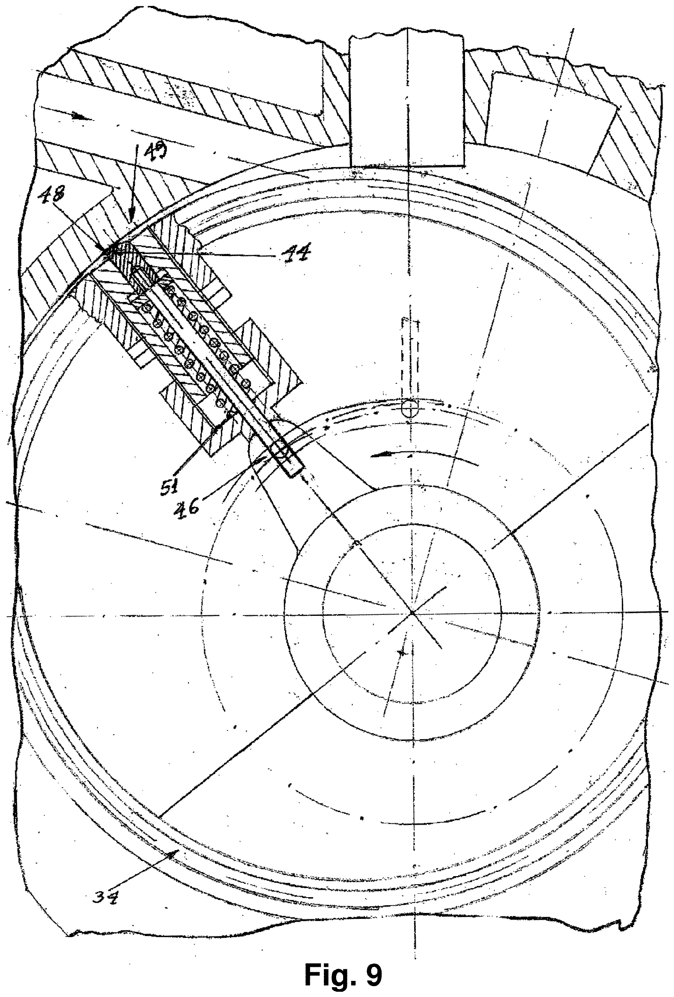

Figure 9 shows a variant of the compression rotor in which the tangential seal 48 (which corresponds to seals A9 and B11) is implemented as a radially-mobile vane 44 with a radial-outward biasing spring 51 and a control pin 46 engaging with a control surface (eg the outer peripheral surface of a substantially circular groove in the side wall of the stator chamber) to maintain the desired vane seal gap distance of the tangential seal 38. As described above in relation to a variant of the vanes A3 and B22 and associated vane actuators, the radially-mobile tangential vane 48 may be moved to follow a trajectory which is not purely circular. This means that the stator periphery wall may be non-circular, for example so that the rotor's sealing edge 48 may pass under the descending vane without interference. It also means that tangential vane seal gap may be varied in dependence on dynamic parameters such as temperature, thermal expansion etc, but with an optimal gap (ie minimal gas leakage).

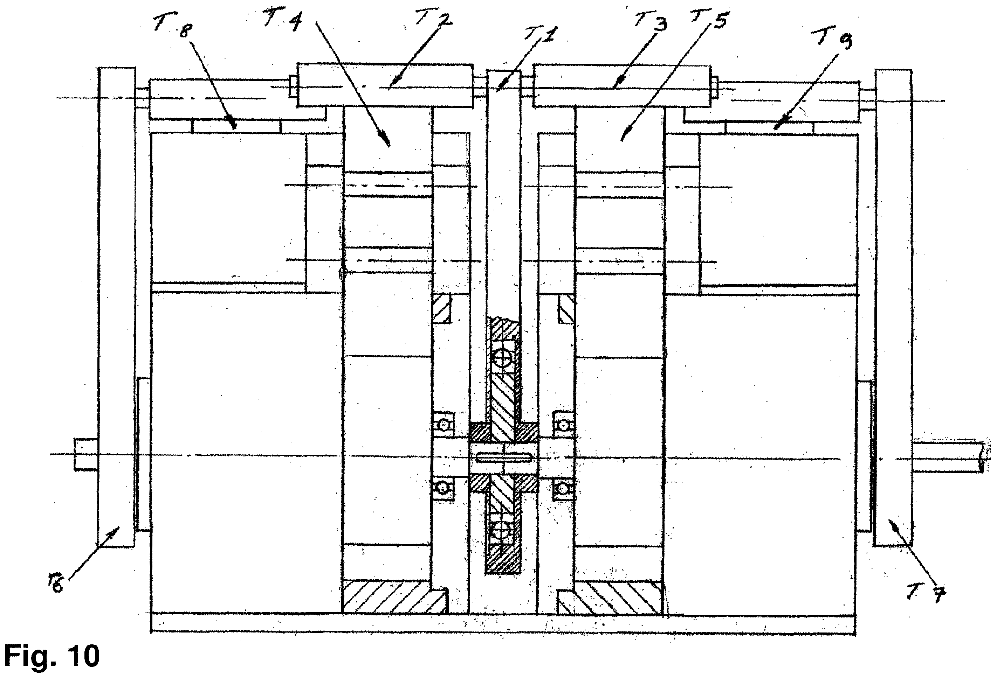

Figure 10 shows how two twin-rotor engine (or equivalent pump or compressor) assemblies such as that shown in figures 1 to 8 can be mechanically coupled, back to back, so as to share a common main shaft and a common actuator shaft. The first (left- hand) twin-rotor assembly comprises two vane shafts T4 and T8, while the second (right- hand) twin-rotor assembly comprises two vane shafts T5 and T9. The vane shafts T4 and T5 are connected to one common follower shaft TI by pivots T2 and T3 respectively.

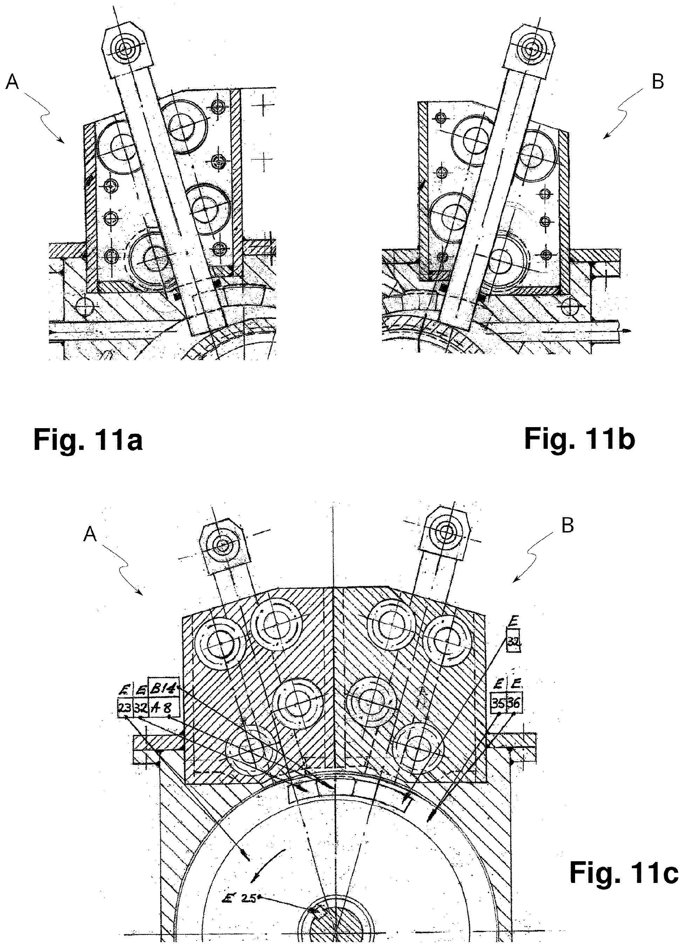

Figures 11a to 11c show how the vane guides (rollers) can be arranged for improved stability of the vane. For each vane, the lower, outer guide is positioned closer to the rotor-stator assembly than the lower, inner guide. By supporting the vane as close as possible to the rotor-stator assembly, lateral flexing of the vane can be minimised, the onset of damaging vibrations can be reduced, and the vane can be of a lighter construction and material. Since the reciprocating action of the vane requires energy to accomplish, a lighter vane results in a reduction in overall energy losses in the engine/pump/compressor. Figure 11a shows the implementation of this variant in the first rotor-stator assembly; figure 11b shows the implementation of this variant in the first rotor- stator assembly; and figure 11c shows the twin rotor-assembly implementation.

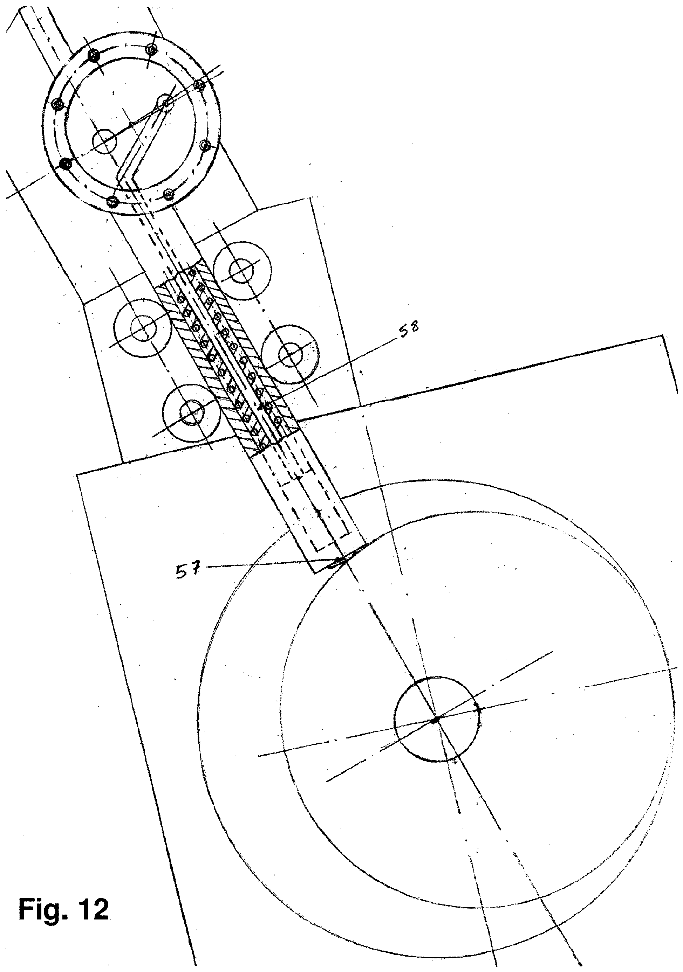

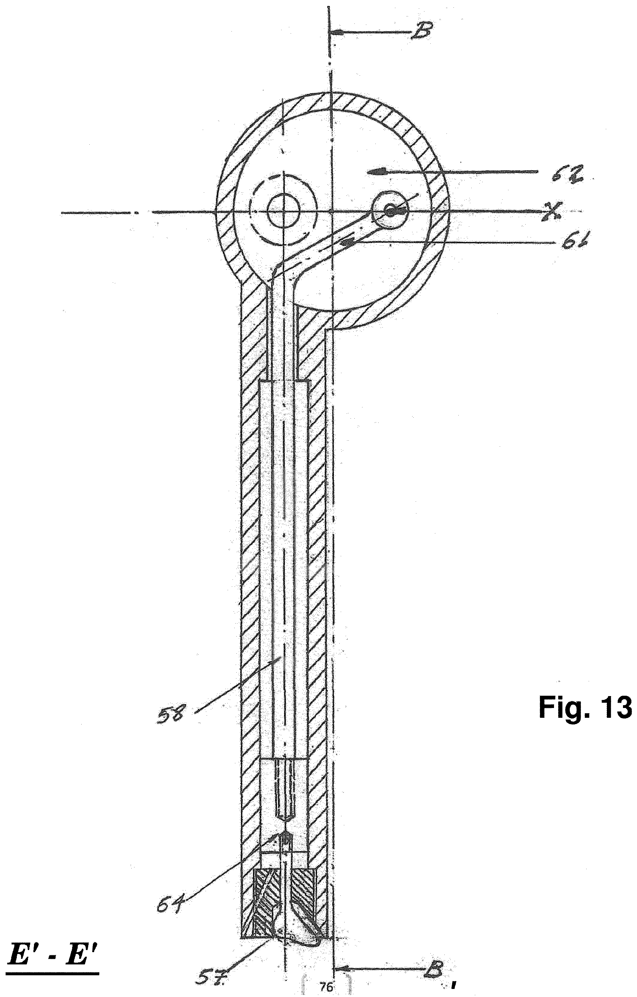

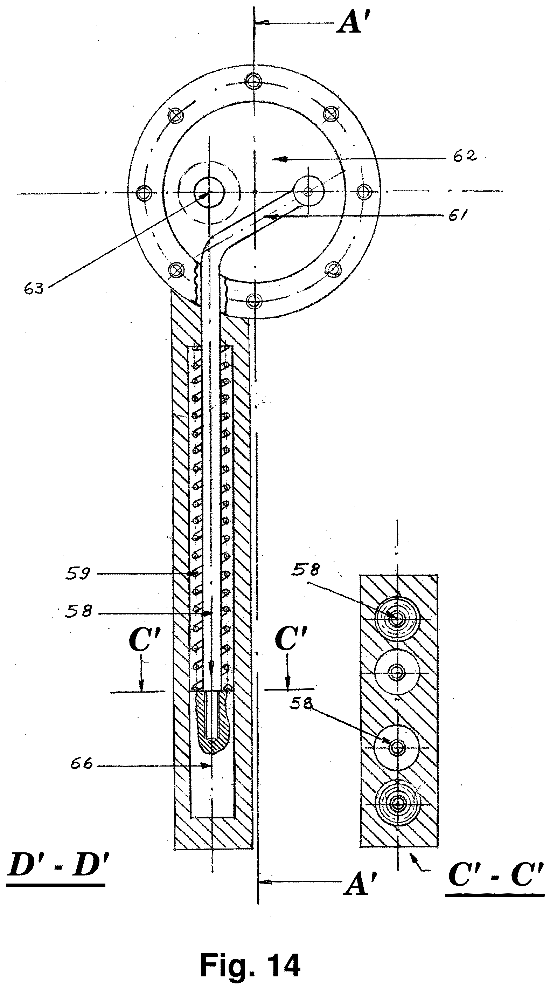

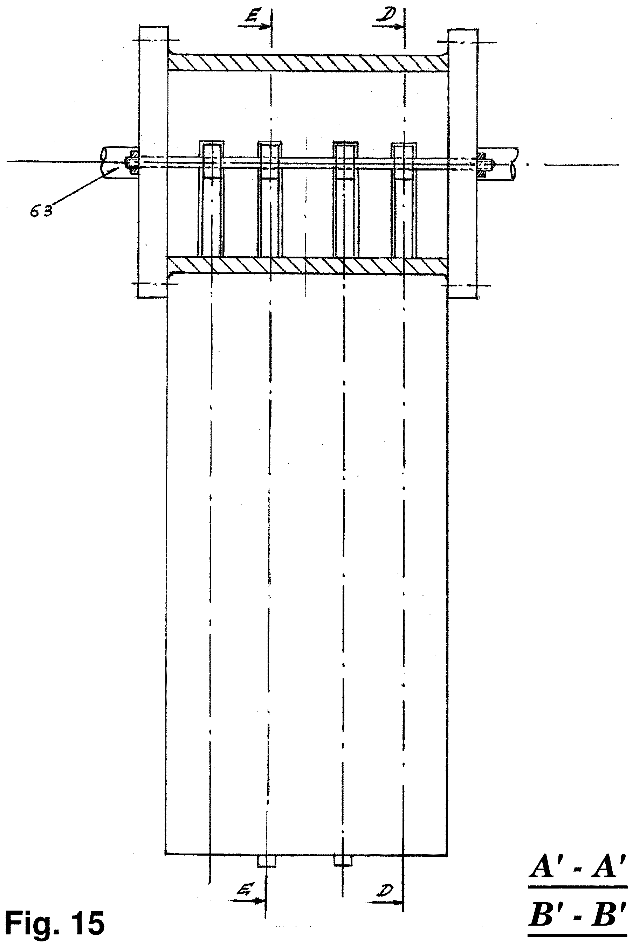

Figures 12 to 15 show that according to the invention the vane is provided with a mechanism for accommodating variations in diameter of the rotor and/or variations in the length of the vane. Such variations may arise during operation due to variations in temperature of the engine/pump/compressor as a whole, and/or due to variations in relative temperatures of the various components. If the stator is cooled, for example, but the rotor temperature increases significantly during operation, the radius of the rotor will increase, and the vane's radial position can be adjusted such that the vane tip moves radially outward so as to maintain a constant seal gap at the vane-tip/rotor-surface interface. The proposed solution illustrated in figures 12 to 16 includes one or more surface-tracking rods, indicated by reference 58 in figures 12 and 13. Each tracking rod comprises a foot 57 in contact with the rotor surface. The foot and rod are lightly biased against the rotor surface by biasing spring 59. The distal end of the vane is provided with a mechanism for translating a radial movement of the tracking rod into an adjustment of the vane's radial position relative to the rotor. In this way, the sealing gap at the rotor surface can be automatically adjusted in dependence on a thermal expansion or contraction of the radial dimensions of the rotor. In the example implementation illustrated in figures 12 to 15, the or each tracking rod is arranged to produce a rotation of an eccentric cam 62 which raises or lowers the vane relative to the vane actuator shaft. A fine adjustment of the sealing gap size, and/or of the movement transfer ratio between the rod and the vane can be accomplished by adjusting the position of the engagement location of the rod's distal end 61 with the cam 62, for example. Such an adjustment mechanism is not shown in the figures. Figure 15 shows a side elevation view of a vane arrangement comprising two tracking rods for translating a change in radius of the rotor into a small rotation of the cam 62, and two adjustment actuating rods for translating the rotation of the cam 62 into a change in radial position of the vane, thereby maintaining a constant, finite seal gap at the vane-tip/rotor-surface interface.

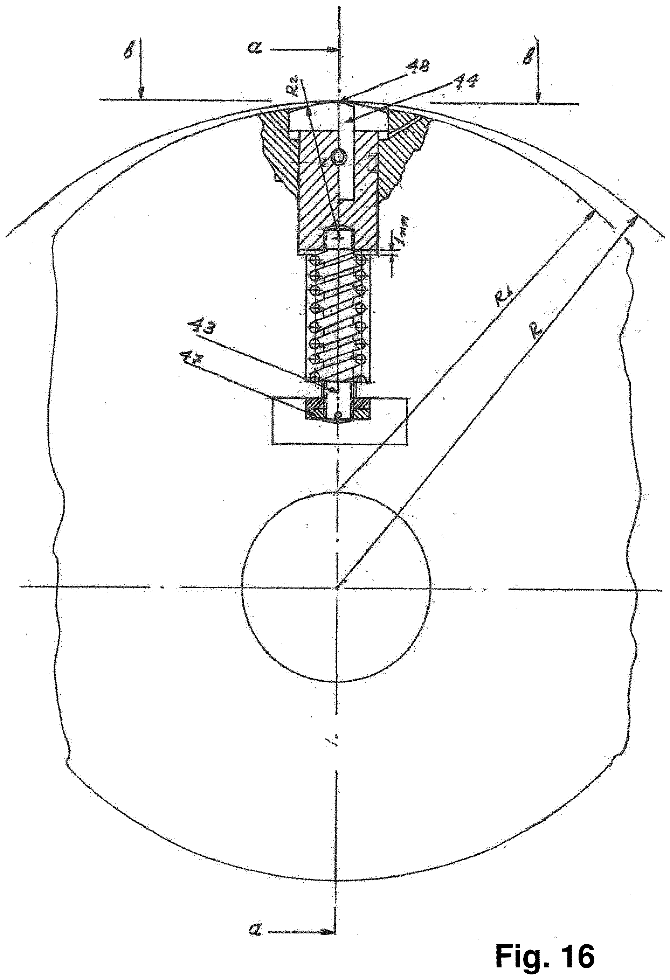

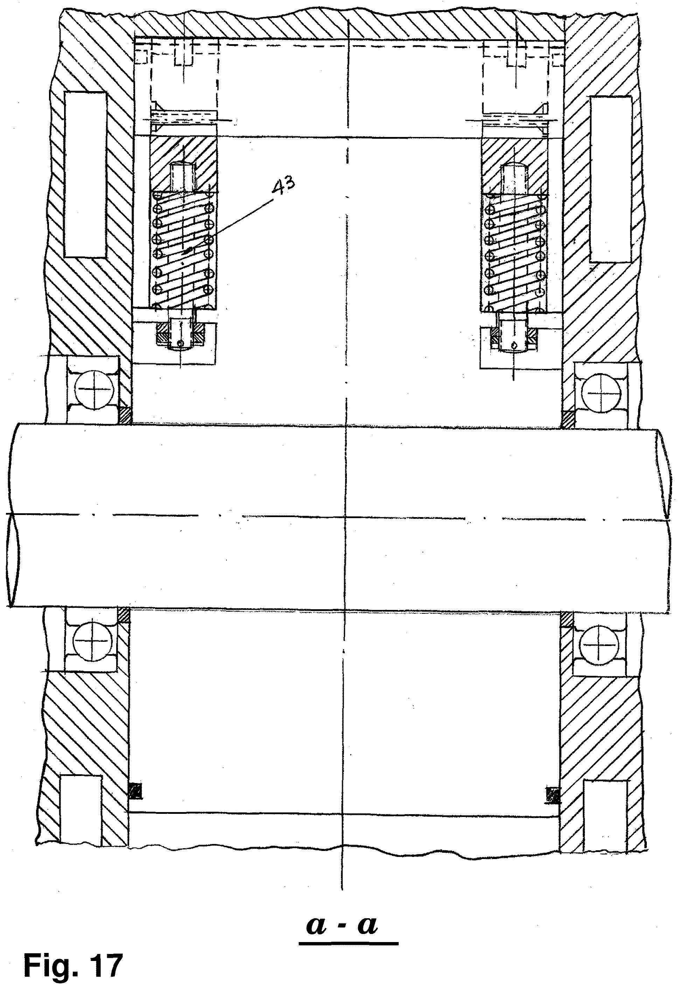

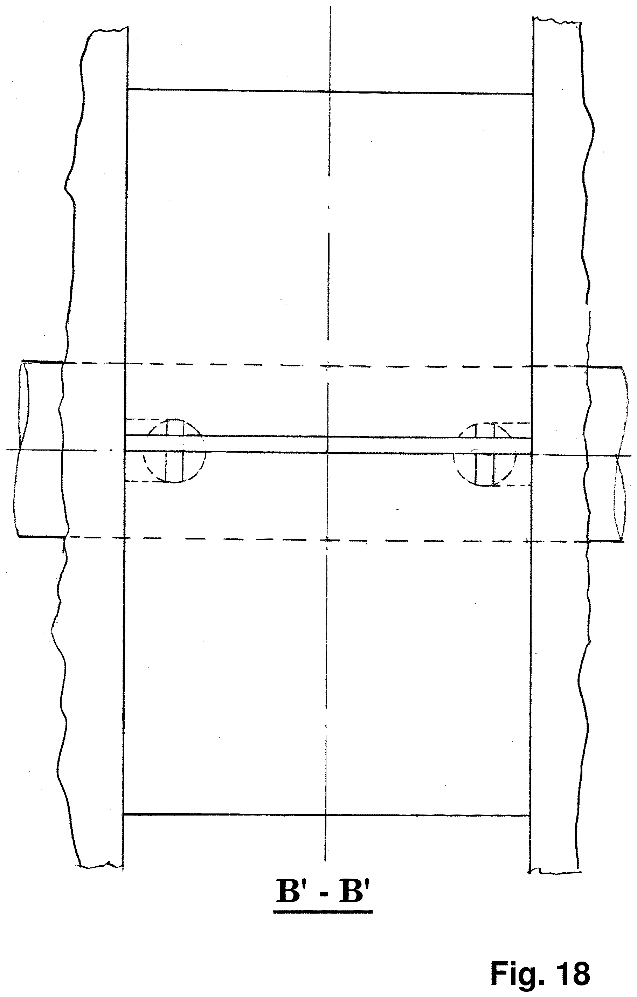

Figures 16 to 18 show a variant of the implementation of figure 9 in which according to the invention the rotor vane is provided with a mechanism for maintaining an optimum seal at the second rotor/stator interface, ie at the point on the rotor's circumference where the rotor outer surface is closest to the stator's interior surface, while avoiding interference with the first (stator) vane. As in figure 9, the rotor vane blade 44 is provided for making effective but low-friction sealing contact between the rotor and the stator. The rotor vane blade 44 is held in low-friction contact against the stator surface by biasing spring and vane blade rod 43. In this variant, however, the vane blade 44 is provided with one or more lateral slide elements 52 which are arranged to engage with corresponding elements at the proximal end of the vane (ie on the vane tip planar surface) so as to ensure that the vane tip of the stator vane and the vane blade of the rotor vane do not come in contact as the rotor vane blade passes the stator vane tip. As shown in figures 17 and 18, the rotor vane blade 44 may be provided with multiple (in this case two) such biasing springs with sliding elements 52. Note that the radial inner end of the vane blade biasing arrangement may follow a tracking path, as in figure 9, or it may be radially fixed, as indicated in figures 16 and 17.

### Index of reference numbers used in the drawings

- AI: Air intake channel, first (intake) volume
- A2: First stator block
- A3: First vane shaft
- A4: First (compression) rotor
- A5: First vane shaft guide
- A6: First vane seal
- A7: Second (compression) volume
- A8: Connecting channel
- A9: First tangential seal
- B10: Second stator block
- B11: Second tangential seal
- B12: Ignition
- B13: Fuel injection
- B14: Connecting channel
- B15: Third (detonation) volume
- B16: Second vane seal
- B17: Second vane shaft guide
- B18: Second (combustion) rotor
- B19: Fourth (exhaust) volume
- B20: Exhaust port
- B22: Second vane shaft
- C24: Second stator outer side wall
- C25: First stator outer side wall
- C34: Lateral seal between rotor and stator side-wall
- C37: Coolant channel
- C38: Main shaft
- E23: Valve disc
- E25: Key and keyway (valve disc)
- E32: Valve disc opening
- E35: First side face of rotating valve disc
- E36: Second side face of rotating valve disc
- F30: First vane actuator rotor
- F32: Second vane actuator rotor
- H26: Second follower shaft eccentric and bearing
- H27: First follower shaft eccentric and bearing
- H28: Second vane actuator connecting pivot axle
- H29: First vane actuator connecting pivot axle
- TI: Common first vane actuator follower
- T2: First actuator pivot of first twin-rotor engine
- T3: First actuator pivot of second twin-rotor engine
- T4: First vane shaft of first twin-rotor engine
- T5: First vane shaft of second twin-rotor engine
- T6: Second vane actuator follower of first twin-rotor engine
- T7: Second vane actuator follower of second twin-rotor engine
- T8: Second vane shaft of first twin-rotor engine
- T9: Second vane shaft of second twin-rotor engine
- 44: Radial rotor vane
- 46: Guide surface for control pin
- 48: Tangential seal gap
- 49: Stator chamber peripheral wall
- 51: Biasing spring
- 52: Slider element

## Claims

1. Rotor-stator assembly for a rotary engine, compressor or pump, comprising:
a rotor (A4) arranged to rotate eccentrically in a stator chamber and a radially-mobile first vane (A3) for providing a first fluid seal (A6) between an outer peripheral surface of the rotor (A4) and the tip of the first vane (A3), and a second fluid seal (A9) at a region of maximum proximity between the outer peripheral surface of the rotor (A4) and the inner peripheral wall of the stator chamber, such that the first and second fluid seals delimit at least a first chamber portion (A1) and a second chamber portion (A7) of the stator chamber, and
a vane actuator (A3, H26, H28) configured for moving the first vane (A3) radially inwards and outwards such that the radial motion of the first vane (A3) follows the eccentric rotary motion of the outer peripheral surface of the first rotor (A4), whereby the first vane (A3) is substantially rotationally static with respect to the stator chamber, whereby
the vane actuator (A3, H26, H28) is configured to support the vane (A3) with a first vane seal gap between the first vane (A3) and the peripheral outer surface of the rotor (A4), wherein the second fluid seal (A9) comprises a radially mobile second sealing vane, the rotor -stator assembly comprising a rotor vane actuator means for urging the radially mobile second sealing vane radially outward, and for controlling a radial extension of the radially mobile second sealing vane beyond the peripheral rotor surface,
wherein the first sealing vane comprises surface tracking means for tracking the radial position of the rotor surface, and adjustment means for, in dependence on the said radial position of the rotor surface, adjusting a radial position of the first vane so as to maintain a constant firstsealing gap,
wherein the second sealing vane comprises interference-avoidance elements for displacing a radial position of the first sealing vane and/or a radial position of the second sealing vane when the second sealing vane passes the first sealing vane in the rotation of the rotor, such that the first and second sealing vanes do not come into contact, **characterised in that** the
tracking means are one or more surface-tracking rods (58), each tracking rod (58) comprising a foot (57) in contact with the surface of the rotor (A4), whereby the foot (57) and rod (58) are lightly biased against the surface of the rotor (A4) by a biasing spring (59) and the distal end of the first vane (A3) is provided with a mechanism for translating a radial movement of the tracking rod (58) into an adjustment of the radial position of the first vane (A3) relative to the rotor, the or each tracking rod (58) being arranged to produce a rotation of an eccentric cam (62) which raises or lowers the vane (A3) relative to a vane actuator shaft, whereby an adjustment mechanism configured to adjust the sealing gap size and/or the movement transfer ratio between the or each tracking rod (58) anc the first vane (A3) by adjusting the position of the engagement location of the rod's (58) distal end (61) with the cam (62) is provided.

2. Rotor-stator assembly according to claim 1, comprising a radial follower shaft arranged to translate eccentric rotation of the rotor (A4) into radial reciprocating motion of the first vane (A3).

3. Rotor-stator assembly according to claim 2, wherein the follower shaft extends radially beyond the peripheral wall of the stator chamber.

4. Rotor-stator assembly according to claim 1, wherein the first vane comprises a substantially planar vane tip, substantially orthogonal to a movement axis of the first vane.

5. Rotor-stator assembly according to one of the preceding claims, wherein the inner peripheral wall of the stator chamber is cylindrical, having a first constant radius, whereby the second fluid seal is formed by the proximity between the peripheral surface of the rotor and the cylindrical peripheral wall of the stator chamber.

6. Rotor-stator assembly according to one of claims 1 to 4, wherein at least one of the rotor and the stator chamber is non-cylindrical.

7. Rotor engine comprising:
a first rotor-stator assembly according to one of the preceding claims, configured such that its first chamber portion (A1) is for performing an intake part of a four-stroke engine cycle, and its second chamber portion (A7) is for performing a compression part of the engine cycle,
a second rotor-stator assembly according to one of the preceding claims, configured such that its first chamber portion (B15) is for performing a detonation part of a four-strokeengine cycle, and its second chamber portion (B19) is for performing an exhaust part of the engine cycle,
a connecting channel (A8, B14) for conveying compressed air from the second chamber portion (A7) of the first rotor-stator assembly into the first chamber portion (B15) of the second rotor-stator assembly,
a rotary disc valve (E23) for opening or blocking the connecting channel (A8, B14) at predetermined parts of the engine cycle,
whereby the disc valve (E23) and the rotors (A4, B18) of the first and second rotor assemblies are mounted on a common main shaft (C38).

## Patentansprüche

1. Rotor-Stator-Anordnung für einen Rotationsmotor, einen Rotationskompressor oder eine Kreiselpumpe, Folgendes umfassend:
einen Rotor (A4), der dafür angeordnet ist, in einer Statorkammer exzentrisch zu rotieren, und einen radial mobilen ersten Flügel (A3) zum Bereitstellen einer ersten Fluiddichtung (A6) zwischen einer Außenumfangsoberfläche des Rotors (A4) und der Spitze des ersten Flügels (A3) und einer zweiten Fluiddichtung (A9) in einer Region maximaler Nähe zwischen der Außenumfangsoberfläche des Rotors (A4) und der Innenumfangswand der Statorkammer derart, dass die erste und die zweite Fluiddichtung mindestens einen ersten Kammerabschnitt (A1) und einen zweiten Kammerabschnitt (A7) der Statorkammer begrenzen, und
einen Flügelaktuator (A3, H26, H28), der dafür gestaltet ist, den ersten Flügel (A3) derart radial einwärts und auswärts zu bewegen, dass die radiale Bewegung des ersten Flügels (A3) der exzentrischen Rotationsbewegung der Außenumfangsoberfläche des ersten Rotors (A4) folgt, wobei der erste Flügel (A3) im Wesentlichen in Bezug auf die Statorkammer rotationsstatisch ist, wobei
der Flügelaktuator (A3, H26, H28) dafür gestaltet ist, den Flügel (A3) mit einem ersten Flügeldichtungsspalt zwischen dem ersten Flügel (A3) und der Umfangsaußenoberfläche des Rotors (A4) zu stützen, wobei die zweite Fluiddichtung (A9) einen radial mobilen zweiten Dichtungsflügel umfasst, wobei die Rotor-Stator-Baugruppe ein Rotorflügel-Aktuatormittel umfasst, um den radial mobilen zweiten Dichtungsflügel radial auswärts zu drücken und um eine radiale Erstreckung des radial mobilen zweiten Dichtungsflügels über die Umfangsrotoroberfläche hinaus zu steuern,
wobei der erste Dichtungsflügel Oberflächennachverfolgungsmittel zum Nachverfolgen der radialen Position der Rotoroberfläche und Justierungsmittel umfasst, um in Abhängigkeit von der radialen Position der Rotoroberfläche eine radiale Position des ersten Flügels zu justieren, so dass ein konstanter ersten Dichtungsspalt aufrechterhalten wird, wobei der zweite Dichtungsflügel Störungsverhinderungselemente zum Verschieben einer radialen Position des ersten Dichtungsflügels und/oder einer radialen Position des zweiten Dichtungsflügels, wenn der zweite Dichtungsflügel den ersten Dichtungsflügel in der Rotation des Rotors passiert, umfasst, so dass der erste und der zweite Dichtungsflügel nicht in Kontakt kommen,
**dadurch gekennzeichnet, dass** es sich bei den Nachverfolgungsmitteln um einen oder mehrere Oberflächennachverfolgungsstäbe (58) handelt, wobei jeder Nachverfolgungsstab (58) einen Fuß (57) in Kontakt mit der Oberfläche des Rotors (A4) umfasst, wobei der Fuß (57) und der Stab (58) durch eine Vorspannfeder (59) leicht gegen die Oberfläche des Rotors (A4) vorgespannt sind und das entfernte Ende des ersten Flügels (A3) mit einem Mechanismus zum Übersetzen einer radialen Bewegung des Nachverfolgungsstabes (58) in eine Justierung der radialen Position des ersten Flügels (A3) relativ zu dem Rotor versehen ist, wobei der oder jeder Nachverfolgungsstab (58) dafür angeordnet ist, eine Rotation eines exzentrischen Nockens (62) zu erzeugen, die den Flügel (A3) relativ zu einer Flügelaktuatorwelle hebt oder senkt, wobei ein Justierungsmechanismus bereitgestellt ist, der dafür gestaltet ist, die Größe des Dichtungsspalts und/oder das Verhältnis der Bewegungsübertragung zwischen dem oder jedem Nachverfolgungsstab (58) und dem ersten Flügel (A3) durch Justieren der Position der Eingriffsstelle des entfernten Endes (61) des Stabes (58) mit dem Nocken (62) zu justieren.

2. Rotor-Stator-Baugruppe nach Anspruch 1, eine radiale Mitnehmerwelle umfassend, die dafür angeordnet ist, exzentrische Rotation des Rotors (A4) in radiale hin- und hergehende Bewegung des ersten Flügels (A3) zu übersetzen.

3. Rotor-Stator-Baugruppe nach Anspruch 2, wobei sich die Mitnehmerwelle radial über die Umfangswand der Statorkammer hinaus erstreckt.

4. Rotor-Stator-Baugruppe nach Anspruch 1, wobei der erste Flügel eine im Wesentlichen ebene Flügelspitze, im Wesentlichen rechtwinklig zu einer Bewegungsachse des ersten Flügels, umfasst.

5. Rotor-Stator-Baugruppe nach einem der vorhergehenden Ansprüche, wobei die Innenumfangswand der Statorkammer zylindrisch mit einem ersten konstanten Radius ist, wobei die zweite Fluiddichtung durch die Nähe zwischen der Umfangsoberfläche des Rotors und der zylindrischen Umfangswand der Statorkammer gebildet ist.

6. Rotor-Stator-Baugruppe nach einem der Ansprüche 1 bis 4, wobei mindestens eines von dem Rotor und der Statorkammer nicht zylindrisch ist.

7. Rotationsmotor, folgendes umfassend:
eine erste Rotor-Stator-Baugruppe nach einem der vorhergehenden Ansprüche, derart konfiguriert, dass ihr erster Kammerabschnitt (A1) dafür vorgesehen ist, einen Ansaugteil eines Viertakt-Motorzyklus durchzuführen, und ihr zweiter Kammerabschnitt (A7) dafür vorgesehen ist, einen Kompressionsteil des Motorzyklus durchzuführen,
eine zweite Rotor-Stator-Baugruppe nach einem der vorhergehenden Ansprüche, derart konfiguriert, dass ihr erster Kammerabschnitt (B15) dafür vorgesehen ist, einen Zündungsteil eines Viertakt-Motorzyklus durchzuführen, und ihr zweiter Kammerabschnitt (B19) dafür vorgesehen ist, einen Ausstoßteil des Motorzyklus durchzuführen,
einen Verbindungskanal (A8, B14), um komprimierte Luft von dem zweiten Kammerabschnitt (A7) der ersten Rotor-Stator-Baugruppe in den ersten Kammerabschnitt (B15) der zweiten Rotor-Stator-Baugruppe zu befördern,
ein Drehtellerventil (E23) zum Öffnen oder Versperren des Verbindungskanals (A8, B14) bei festgelegten Teilen des Motorzyklus,
wobei das Tellerventil (E23) und die Rotoren (A4, B18) der ersten und der zweiten Rotorbaugruppe auf eine gemeinsame Hauptwelle (C38) montiert sind.

## Revendications

1. Ensemble rotor-stator pour un moteur rotatif, un compresseur ou une pompe, comprenant :
un rotor (A4) agencé pour tourner de manière excentrique dans une chambre de stator, et une première palette mobile radialement (A3) pour assurer un premier joint d'étanchéité (A6) entre une surface périphérique externe du rotor (A4) et la pointe de la première palette (A3) et un deuxième joint d'étanchéité (A9) dans une région de proximité maximale entre la surface périphérique externe du rotor (A4) et la paroi périphérique interne de la chambre de stator, de sorte que les premier et deuxième joints d'étanchéité délimitent au moins une première portion de chambre (A1) et une deuxième portion de chambre (A7) de la chambre de stator, et un actionneur de palette (A3, H26, H28) configuré pour déplacer la première palette (A3) radialement vers l'intérieur et vers l'extérieur de sorte que le mouvement radial de la première palette (A3) suive le mouvement de rotation excentrique de la surface périphérique externe du premier rotor (A4),
moyennant quoi la première palette (A3) est sensiblement statique en rotation par rapport à la chambre de stator,
moyennant quoi l'actionneur de palette (A3, H26, H28) est configuré pour supporter la palette (A3) avec un premier jeu d'étanchéité de palette entre la première palette (A3) et la surface périphérique externe du rotor (A4), dans lequel le deuxième joint d'étanchéité (A9) comprend une deuxième palette d'étanchéité mobile radialement, l'ensemble rotor-stator comprenant des moyens actionneurs de palette de rotor pour pousser la deuxième palette d'étanchéité mobile radialement vers l'extérieur et pour contrôler l'extension radiale de la deuxième palette d'étanchéité mobile radialement au-delà de la surface périphérique du rotor,
dans lequel la première palette d'étanchéité comprend des moyens de suivi de surface destinés à suivre la position radiale de la surface du rotor, et des moyens de réglage permettant, en fonction de ladite position radiale de la surface du rotor, de régler la position radiale de la première palette afin de maintenir un premier jeu d'étanchéité constant,
dans lequel la deuxième palette d'étanchéité comprend des éléments anti-interférence destinés à déplacer la position radiale de la première palette d'étanchéité et/ou la position radiale de la deuxième palette d'étanchéité quand la deuxième palette d'étanchéité croise la première palette d'étanchéité lors de la rotation du rotor, de sorte que les première et deuxième palettes d'étanchéité n'entrent pas en contact,
**caractérisé en ce que**
les moyens de suivi sont une ou plusieurs tiges de suivi de surface (58), chaque tige de suivi (58) comprenant un pied (57) en contact avec la surface du rotor (A4), moyennant quoi le pied (57) et la tige (58) sont légèrement rappelés contre la surface du rotor (A4) par un ressort de rappel (59) et l'extrémité distale de la première palette (A3) est pourvue d'un mécanisme permettant de convertir un déplacement radial de la tige de suivi (58) en un réglage de la position radiale de la première palette (A3) par rapport au rotor, chacune desdites une ou plusieurs tiges de suivi (58) étant agencée de manière à produire une rotation d'une came excentrique (62) qui soulève ou abaisse la palette (A3) par rapport à un arbre d'actionneur de palette,
moyennant quoi un mécanisme de réglage est pourvu, configuré pour régler la taille du jeu d'étanchéité et/ou le rapport de transfert de déplacement entre chacune desdites une ou plusieurs tiges de suivi (58) et la première palette (A3) en réglant la position du point de contact entre l'extrémité distale (61) de la tige (58) et la came (62).

2. Ensemble rotor-stator selon la revendication 1, comprenant un arbre suiveur radial agencé pour convertir la rotation excentrique du rotor (A4) en un mouvement de va-et-vient radial de la première palette (A3).

3. Ensemble rotor-stator selon la revendication 2, dans lequel l'arbre suiveur s'étend radialement au-delà de la paroi périphérique de la chambre de stator.

4. Ensemble rotor-stator selon la revendication 1, dans lequel la première palette comprend une pointe de palette sensiblement plane, sensiblement orthogonale à un axe de déplacement de la première palette.

5. Ensemble rotor-stator selon l'une des revendications précédentes, dans lequel la paroi périphérique interne de la chambre de stator est cylindrique avec un premier rayon constant, moyennant quoi le deuxième joint d'étanchéité est formé par la proximité entre la surface périphérique du rotor et la paroi périphérique cylindrique de la chambre de stator.

6. Ensemble rotor-stator selon l'une des revendications 1 à 4, dans lequel au moins un élément parmi le rotor et la chambre de stator est non cylindrique.

7. Moteur à rotor comprenant :
un premier ensemble rotor-stator selon l'une des revendications précédentes, configuré de telle sorte que sa première portion de chambre (A1) soit destinée à effectuer une partie admission d'un cycle moteur à quatre temps, et sa deuxième portion de chambre (A7) soit destinée à effectuer une partie compression du cycle moteur,
un deuxième ensemble rotor-stator selon l'une des revendications précédentes, configuré de telle sorte que sa première portion de chambre (B15) soit destinée à effectuer une partie détonation d'un cycle moteur à quatre temps, et sa deuxième portion de chambre (B19) soit destinée à effectuer une partie échappement du cycle moteur,
un canal de connexion (A8, B14) pour acheminer de l'air comprimé depuis la deuxième portion de chambre (A7) du premier ensemble rotor-stator dans la première portion de chambre (B15) du deuxième ensemble rotor-stator,
une vanne à disque rotatif (E23) pour ouvrir ou bloquer le canal de connexion (A8, B14) à des parties prédéterminées du cycle moteur,
moyennant quoi la vanne à disque (E23) et les rotors (A4, B18) des premier et deuxième ensembles de rotor sont montés sur un arbre principal commun (C38).
